# EUROPEAN PATENT APPLICATION

(11) **EP 0 948 178 A2**
(43) Date of publication of application: **06.10.1999**
(21) Application number: 99302182.3
(22) Date of filing: 22.03.1999
(51) Int. Cl.: H04M 1/65, H04M 1/66

(54) **Apparatus and method to allow recording of voice messages based on call related information**

(30) Priority: 02.04.1998 US 53658
(71) Applicant: LUCENT TECHNOLOGIES INC., Murray Hill, New Jersey 07974-0636 (US)
(72) Inventor: Cannon, Joseph M., Harleysville, Pennsylvania 19438 (US); Johanson, James A., Macungie, Pennsylvania 18062 (US); Grillo, Anthony, Wayne, Pennsylvania 19087 (US); McDowell, Richard Lawrence, Chalfont, Pennsylvania 18914 (US)
(74) Representative: Buckley, Christopher Simon Thirsk

(57) **Abstract**

A voice messaging system includes pre-storage of a plurality of caller information in an authorized caller/call information directory. Each entry in the authorized caller/call information directory is associated with a respective variable indicating whether or not that caller may record a voice message. If the caller is not authorized to leave a voice message, the voice messaging system remains on-hook. Alternatively, the voice messaging system may go "off-hook" but play a special outgoing message to the unwanted caller. In an alternative mode of operation, the authorized caller/call information directory may contain the call information of those callers who the voice messaging system will not allow to leave a voice message. All other callers may leave a voice message. This allows a user to avoid the inconvenience of listening to voice messages from undesired parties such as from a telemarketer or a stalker.

## Description

### Field of the Invention

This invention relates generally to a voice messaging system and more particularly, to a voice messaging system and method which controls recording of voice messages based on call information relating to an incoming call.

### Background of Related Art

Voice messaging systems have become an essential part of our society. For instance, voice mail type systems installed with private branch exchanges (PBXs) are found in most businesses, while home usage of telephone answering devices is ever-increasing.

Conventional voice messaging machines are capable of receiving Caller ID information associated with an incoming call if a user subscribes to a Caller ID service offered by the local telephone company. Using Caller ID, generally a caller's telephone number and/or household name is transmitted by the telephone company to the customer. Using Type I service, the Caller ID information is transmitted during the silent interval between the first two rings in an on-hook condition. Type II Caller ID receives Caller ID information in an off-hook condition.

When an incoming call is answered by the voice messaging system, and if the caller leaves a voice message, the voice message and Caller ID information associated therewith may be stored in the voice messaging system to be retrieved by the user during playback of the voice message.

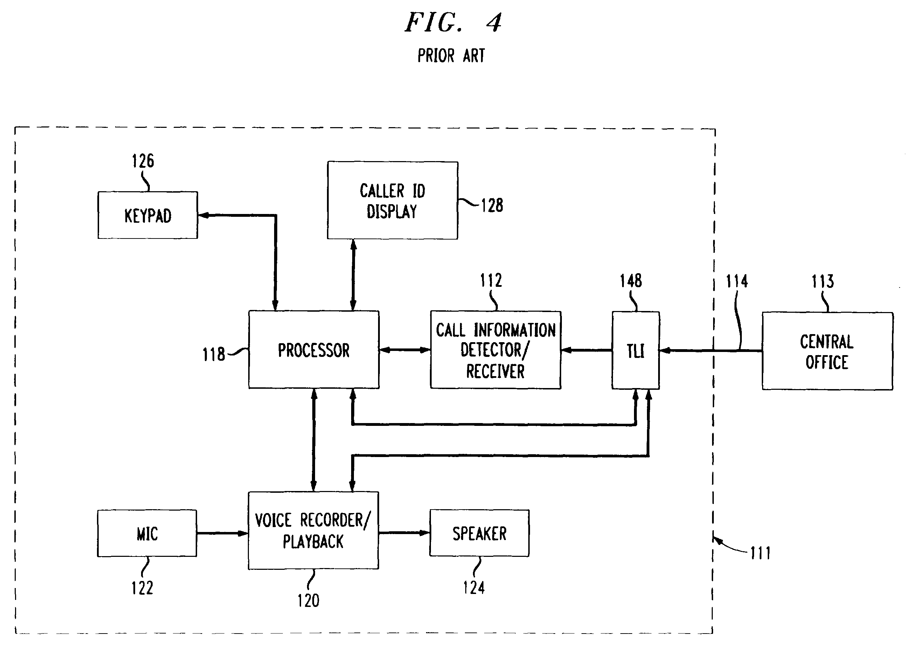

One conventional Type I/ Type II Caller ID system is shown in **FIG. 4** and includes customer premises equipment **111** having a call information detector/receiver **112** which receives a telephone number or other call related information of a calling party from the central office **113** over the telephone line **114** via telephone line interface **148**. For Type I functionality, e.g., when the customer premises equipment **111** is on-hook, the telephone number or other call related information of the calling party is received by the detector/receiver **112** during the silent interval between the first and second rings. For Type II functionality, i.e., while in a call waiting mode (off-hook), the call related information follows an alerting signal such as CAS tones. Controller **118** is any suitable processor for the application, e.g., a microprocessor, a digital signal processor, or a microcontroller.

The telephone number and/or the calling party's household name associated with that telephone number are displayed on a display device **128**. The TAD **111** includes a voice recorder/playback circuit **120** having a standard microphone **122** and speaker **124** electrically connected thereto. An alpha-numeric keypad **126** is also provided for programming the TAD **111** and for controlling operation of TAD **111**.

Conventional voice messaging systems permit all callers to record a voice message. However, this may become annoying to a user who, when playing back recorded voice messages, must listen to or perform the necessary manual steps to at least skip-over voice messages that are recorded by, e.g., unknown callers, callers from unrecognized calling locations, or telemarketers.

Thus, there is a need to provide a voice messaging system which records and/or plays back only desirable voice messages.

### Summary Of The Invention

In accordance with the principles of the present invention, a voice messaging system and method includes a plurality of stored call information, each being associated with a respective variable indicating whether or not a caller may record a voice message. A call related information receiver receives call related information of an incoming telephone call. A processor compares the plurality of call information with the received call related information to identify a respective variable. An on/off hook detect circuit is operatively associated with the processor to place the voice messaging system in an off-hook condition when the variable indicates that the caller may record a voice message.

### Brief Description Of The Drawings

Features and advantages of the present invention will become apparent to those skilled in the art from the following description with reference to the drawings, in which:
**FIG. 1** is a block diagram illustrating a TAD provided in accordance with the principles of the present invention;
**FIG. 2** is a physical view of a TAD in conformance with the principles of the present invention;
**FIG. 3** is a more detailed block diagram of one embodiment of the TAD shown in **FIG. 1**; and
**FIG. 4** is a block diagram of a conventional TAD.

### Detailed Description Of Illustrative Embodiments

The present invention relates to a voice messaging system such as a telephone answering device or voice mail system which, based on call related information associated with an incoming call, permits only certain callers to record a voice message. The embodiment described is a telephone answering device, but the principles disclosed are equally applicable to voice messaging systems in general.

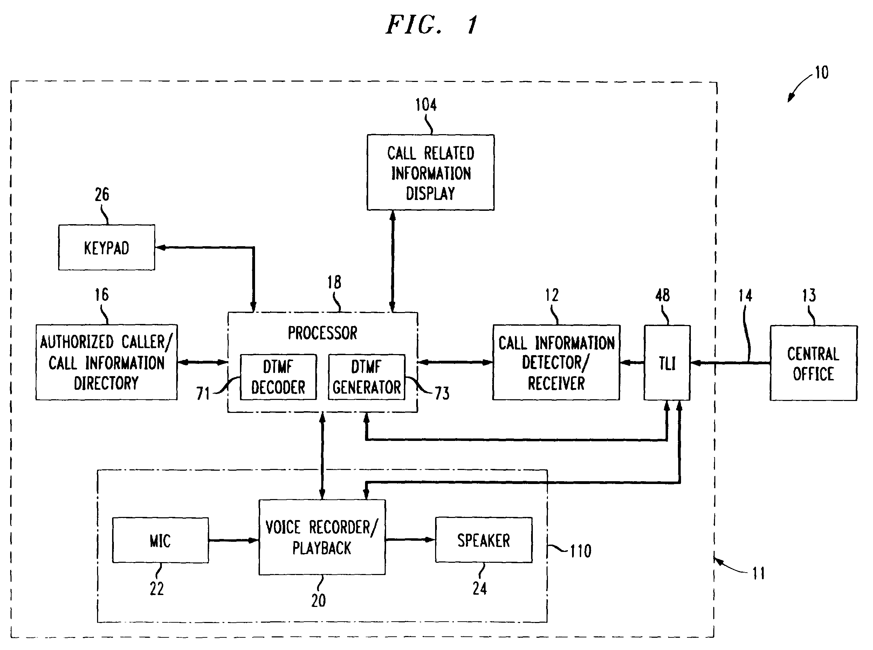

With reference to **FIG. 1**, a voice messaging system, generally indicated at **10**, includes a telephone answering device (TAD) **11** having a call information detector/receiver circuit **12** which receives call related information from a central office **13** over a telephone line **14** via a telephone line interface (TLI) **48**. Call related information (e.g. Caller ID information) such as a telephone number and/or the household name of the calling party is received by the TAD **11** between the first and second rings of an incoming call.

The TAD **11** includes a controller **18**, which may be any appropriate processor, e.g., a microprocessor, a digital signal processor, or microcontroller. In the disclosed embodiment, the controller **18** is a DSP.

Call related information, e.g., a telephone number, area code, and/or household name associated with the incoming call is received by the call information detector/receiver **12** and is compared by a processor **18** with prestored call information, i.e, telephone numbers, area codes and/or household names contained in an authorized caller/call information directory **16**. The comparison identifies whether or not the caller is authorized to record a voice message on the TAD **11**.

A user can pre-program authorized caller/call information into the authorized caller/call information directory **16** by entering, via keypad **26**, information relating to an expected caller such as a telephone number, an area code, and/or a household name. Alternatively, a user can enter information into the authorized caller/call information directory **16** by forwarding information from elsewhere in the TAD **11**. For instance, upon depression of a dedicated "forward call related information" button or a predetermined code on the keypad **26**, information retained in the call information detector/receiver **12** may be automatically entered into the authorized caller/call information directory **16**.

Additionally, the user may identify the particular entries in the authorized caller/call information directory **16** as "permit" recording or "do not permit" recording and enter a variable which corresponds to the authorization relating to that call information. For instance, If a user permits a caller to record a voice message, a variable is entered to indicate that the caller is "permitted to record". If the user does not permit a certain caller to record a voice message, a different variable would be associated with that caller's information to indicate a "don't record" function. For example, variables entered could be a number such as "1", or a letter such as "Y", corresponding to the "permitted to record" function. On the other hand, a number such as "2" or a letter such as "N", could be entered to indicate a "don't record" function.

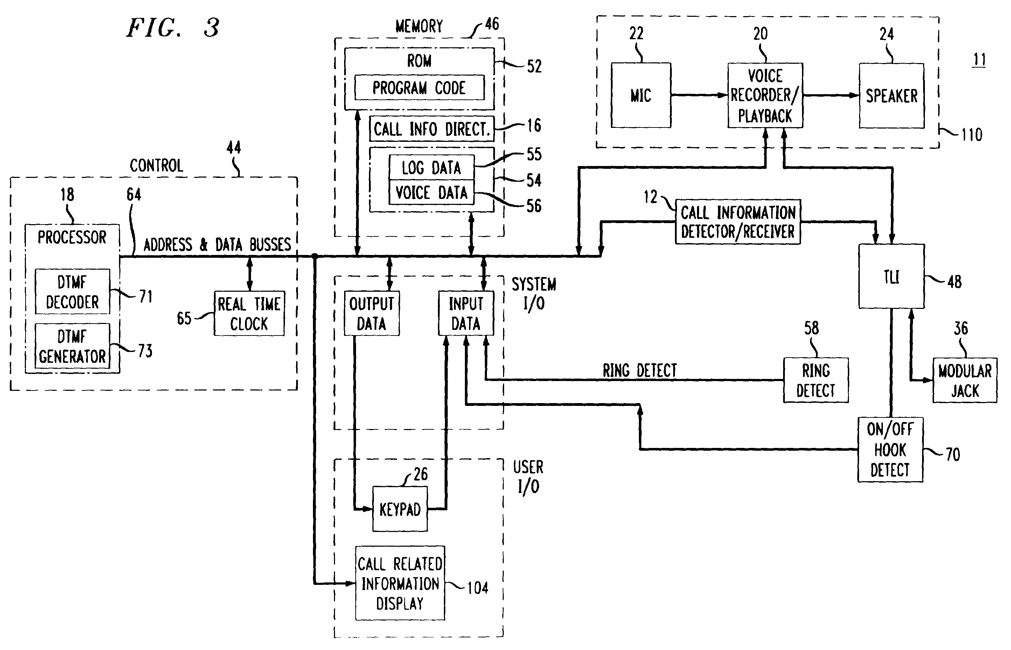

The authorized caller/call information directory **16** is stored in non-volatile memory such as flash memory at the TAD **11**. When the incoming call related information relating to a calling party matches the call information in the authorized caller/call information directory **16**, the associated variable is checked. When the associated variable indicates a "permitted to record" function, the processor **18** causes an on/off hook detect circuit **70** (**FIG. 3**) to go "off-hook" permitting a telephone connection between the TAD **11** and the calling party, and the voice recorder/playback circuit **20** to transmit an outgoing greeting message to the caller, and to record a voice message if the caller chooses to record a voice message. If, however, the variable determined indicates a "don't record" function, the TAD **11** remains on-hook. Thus, the TAD **11** does not answer the telephone for undesired callers.

Alternatively, the TAD **11** could answer all calls, but only allow desired callers to actually leave a message. In this way, a warning greeting message could be played for those undesirable callers.

The TAD **11** includes a voice module **110**, including the voice recorder/playback circuit **20**, a microphone **22** and a speaker **24** in communication with the processor **18**. The function of the voice recorder/playback circuit **20** is to record voice messages in and to playback voice messages from voice memory. One example of a voice recorder/playback circuit **20** is expressly disclosed in U.S. Patent No. 5,524,140, the contents of which are hereby incorporated into the present specification by reference.

The processor **18** includes a dual tone multifrequency (DTMF) decoder **71** and a DTMF generator **73** relating to controls passed from an incoming call. Alternatively, the voice module **110** may include software modules which perform DTMF detection and decoding.

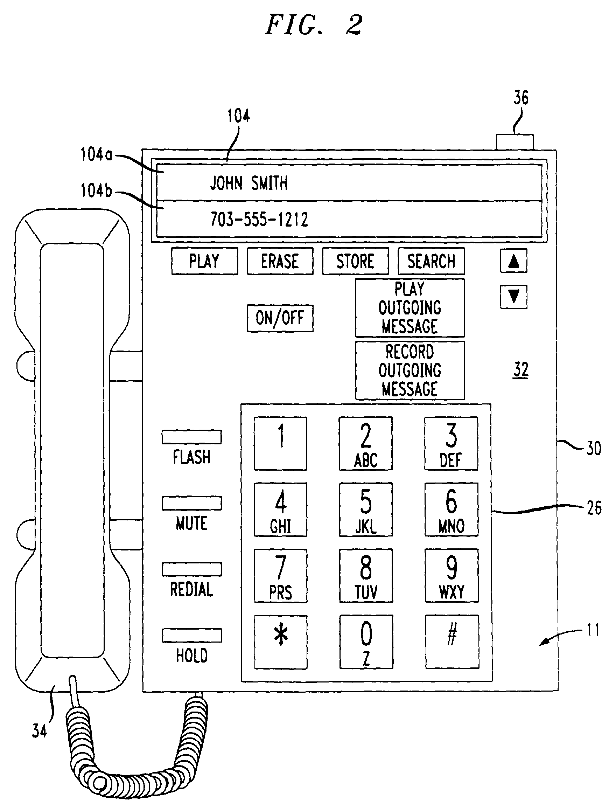

The TAD **11** may be packaged to fit within a portable console **30** as shown in **FIG. 2**. The TAD **11** includes a control panel **32**. The console **30** may be equipped with a standard handset **34** and a phone jack **36** which can be plugged into any standard telephone company modular jack, e.g., an RJ-11 jack. The control panel **32** includes a liquid crystal display (LCD) **104** and an alpha-numeric keypad **26**. As noted above, the LCD **104** may display the call related information of the incoming calls, e.g., the telephone number and/or the household name associated with the incoming call. If there is no call related information relating to a particular incoming call, the LCD **104** is blank or otherwise indicates that call related information is not available for that particular call.

**FIG. 3** shows a detailed circuit diagram of the TAD **11** shown in **FIGs. 1 and 2**. The TAD **11** includes a control circuit **44**, memory **46**, a telephone line interface (TLI) **48**, a display **104** and a voice module **110**.

Control circuit **44** includes the processor **18** which controls the TAD **11** by executing instructions that are stored in program code in ROM **52.** Random access memory (RAM) **54** is also provided for general use. The memory also includes non-volatile memory to, e.g., store log and priority data **55** and voice message data **56**.

A real time clock circuit **65** provides the TAD **11** with the current time and date.

The processor **18** controls the functioning of the voice/playback circuit **20** such as PLAY, RECORD, ERASE and STOP signals. The processor **18** can distinguish three states during a call, e.g., voice signals, DTMF signals, or dial tone and silence, by reading the level and modulation of the signals on the telephone line **14**. The voice recorder/playback circuit **20** can distinguish between the tones of DTMF signals and the signal level ranges associated with human speech detected on the telephone line **14**. If voice signals are detected, the processor **18** immediately executes a voice record routine. If no voice is present on the telephone line **14**, but DTMF signals are being transmitted, the processor **18** executes a DTMF decode routine. If there is a dial tone or silence on the telephone line **14** for a predetermined period of time, e.g., five seconds, the processor **18** causes the on/off hook detect circuit **70** to go "on-hook", hanging up the telephone terminating the call.

The telephone line interface **48** includes circuitry which permits the TAD **11** to be connected directly to a standard telephone module jack, i.e., an RJ-11 jack. The telephone line interface circuit **48** also includes various control and monitoring circuits that are common to ordinary telephones. For instance, a ring detect circuit **58** detects the ring signal of an incoming call. In the illustrated embodiment, the TAD **11** includes a call information detector/receiver **12** to detect and receive call information (e.g., caller ID information) relating to an incoming call, e.g., the telephone number of an incoming call or a household name associated with the telephone number of the incoming call. One protocol which can be used for the otherwise conventional portions of the circuit shown in **FIG. 3** is described in U.S. Patent No. 4,582,956, the disclosure of which is hereby expressly incorporated by reference into the present specification.

Frequency shift keying, phase shift keying, quadrature amplitude modulation or any other suitable modulation technique may be used for transmitting the call information to the TAD **11.**

Operation of the TAD **11** shown in **FIGs. 1-3** is as follows. When a caller initiates a call to the TAD **11**, the ring detect circuit **58** provides a signal indicative of the incoming ring signal to the processor **18**. Call related information is transmitted by the central office **13** to the TAD **11** during the silent period between the first and second rings, and is stored in the log data memory **55**.

In accordance with the present embodiment, the incoming call related information is received by the call information detector/receiver **12** and is compared with call information in the authorized user/call information directory **16** to determine whether the call should be answered and allow the caller to record a message, or whether the call should not be answered. If the variable identified indicates a "don't record" function, the processor **18** remains "on-hook", thereby preventing the caller from recording a voice message. If, on the other hand, the variable identified indicates a "permitted to record" function, then the processor **18** causes the TAD **11** to go "off-hook" after a user selected ring count, and then causes the voice/recorder playback circuit **20** to transmit a pre-recorded outgoing greeting message through the telephone interface circuit **48** to the telephone line **14**. Subsequently, the caller is allowed to record a voice message.

If there is no match of the incoming call related information pre-stored with call information in the authorized caller/call information directory **16**, the TAD **11** may enter a default condition. For example, the TAD **11** may be user programmed to permit all non-matching callers to be able to record a voice message as a default. Alternatively, the processor **18** of the TAD **11** may be programmed to prevent all non-matching callers from leaving a voice message on the TAD **11**.

When a known caller is calling from a new telephone number or a different household such that the Caller ID or other received call related information does not match call information in the authorized user/call information directory **16**, an algorithm may be incorporated in the TAD **11** to override an otherwise identified or default "don't record" function. Alternatively, the TAD **11** could go "off-hook" after a certain number of rings and wait for a manually input authorization code to be input by the remote caller via DTMF tones. If an authorizing code is received, the TAD **11** will initiate a normal voice recording routine. If an authorizing code is not received, then the TAD **11** will time out after an appropriate amount of time, and terminate the call.

It can be appreciated that the TAD **11** may be programmed to permit only authorized callers to record voice messages by associating call information of authorized callers with, e.g., a variable indicating a "permitted to record" function. In this regard, there is no need for a user to program the negative, e.g., call information regarding a "don't record" function since, if there is no match of call related information with an authorized party stored in the authorized caller/call information directory **16**, the TAD **11** may be programmed to remain on-hook. Nevertheless, if a particular calling party is to be avoided, entry of their call information such as telephone number and/or household name will ensure that no messages can be left from that telephone number.

Voice message signals are transmitted to and from the voice recorder/playback circuit **20** via the telephone line **14**, RJ-11 jack **36**, and telephone line interface **48**. The voice message signal is preferably digitized, compressed or encoded using any conventional algorithm such as CELP, and presented to the processor **18** for storage in the voice message data section **56** of the memory **46**. It can be appreciated that other storage devices such as cassette tapes are also possible and within the scope of the present invention.

The incoming voice messages are linked with the call related information stored in log data memory **55** for that incoming call in a conventional manner. When playing back recorded voice messages, the call related information associated with the played back voice message is displayed on LCD **104**, with the household name being displayed at **104a** and/or the associated telephone number being displayed at **104b** as shown in **FIG. 2.**

The present invention has been described with reference to Type I (on-hook) Caller ID service. With Type I Caller ID service as discussed above, the call related information, e.g., the Caller ID information, is transmitted generally during the silent interval between the first two rings. Type I Caller ID systems which receive Caller ID information relating to incoming calls when the called party is in an on-hook mode are known as Calling Identity Delivery (CID) systems. The invention is also applicable to Type II Caller ID service which includes all Type I features but also accommodates the transmission of Caller ID information while the TAD is already off-hook with another party, e.g., additionally accommodates call waiting (CW) service. The handset or speaker and microphone of a Type II called party's customer premises equipment is typically muted while the Caller ID information is transmitted by the central office. Type II Caller ID/Call Waiting service is abbreviated as CIDCW.

While the disclosed embodiments describe the reception of Caller ID information, the invention relates equally to the reception and processing of any call related information.

A voice messaging system in accordance with the principles of the present invention provides an effective way of controlling who may or may not record a voice message.

While the invention has been described with reference to the exemplary embodiments thereof, those skilled in the art will be able to make various modifications to the described embodiments of the invention without departing from the true spirit and scope of the invention.

## Claims

1. A voice messaging system comprising:
a memory adapted and arranged to contain a plurality of call information;
a call related information receiver to receive call related information with respect to an incoming call; and
a processor to compare said received call related information with respect to said incoming call with said respective call information contained in said memory to control an operating state of said voice messaging system.

2. The voice messaging system according to claim 1, wherein:
said operating state is an off-hook condition.

3. The voice messaging system according to claim 2, wherein:
said memory further includes a plurality of indicators each being associated with respective call information of a caller permitted to record a voice message, such that when one of said indicators is identified, said processor initiates said off-hook condition.

4. The voice messaging system according to claim 1, wherein:
said call related information receiver is constructed and arranged to receive said call related information in the form of a telephone number associated with said incoming call.

5. The voice messaging system according to claim 1, wherein:
said call related information receiver is constructed and arranged to receive said call related information in the form of at least a portion of a telephone number associated with said incoming call.

6. The voice messaging system according to claim 5, wherein:
said at least a portion of a telephone number is an area code associated with said incoming call.

7. The voice messaging system according to claim 1, wherein:
said call related information receiver is constructed and arranged to receive said call related information in the form of a household name associated with said incoming call.

8. The voice messaging system according to claim 1, further comprising:
an alpha-numeric keypad; and
a telephone handset.

9. The voice messaging system according to claim 1, wherein:
said memory is further adapted and arranged to receive forwarded call related information from at least one of said call related information receiver and said processor.

10. A voice messaging system comprising:
a memory adapted and arranged to contain a plurality of caller information, each of said plurality of caller information being associated with a respective variable indicating whether or not a caller may record a voice message;
a receiver to receive call related information of an incoming telephone call;
a processor to compare said plurality of call information with said received call related information to identify a respective variable; and
a telephone line interface operatively associated with said processor to place said voice messaging system in an off-hook condition when said variable indicates that said caller may record a voice message.

11. The voice messaging system according to claim 10, further comprising:
a voice recorder to record a voice message.

12. A method of controlling a voice messaging system having a call related information receiver to receive call related information with respect to an incoming call, the method comprising:
providing a plurality of call information;
adapting and arranging said voice messaging system to compare said received call related information with respect to said incoming call with said provided plurality of call information to identify selected callers; and
adapting and arranging said voice messaging system to control an operating function of said voice messaging system based on said identified undesirable callers.

13. The method according to claim 12, wherein:
said selected callers are desirable callers.

14. The method according to claim 12, wherein:
said selected callers are undesirable callers.

15. The method according to claim 12, wherein:
said operating function is an off-hook condition permitting said voice messaging system to go off-hook to record a voice message from said incoming call.

16. The method according to claim 15, further comprising:
providing a plurality of indicators each being associated with respective call information of a caller permitted to record a voice message, such that when one of said plurality of indicators is identified, said off-hook condition is enabled.

17. The method according to claim 15, wherein:
said respective call information are each a telephone number.

18. The method according to claim 15, wherein:
said respective call information are each a household name.

19. The method according to claim 15, wherein:
said respective call information are each at least a portion of a telephone number.

20. The method according to claim 19, wherein:
said at least a portion of said telephone number is an area code.

21. The method according to claim 12, further comprising:
forwarding call related information from at least one of said call related information receiver and said processor to said provided plurality of call information.

22. A voice messaging system comprising:
memory containing a plurality of stored variables each indicative of an operating function of said voice messaging system, each of said plurality of variables being associated with respective call information;
receiving means for receiving call related information with respect to an incoming call;
comparing means for comparing said received call related information with respect to said incoming call with said respective call information to identify one of said plurality of stored variables; and
controlling means for controlling said operating function based on said identified variable.

23. The voice messaging system according to claim 22, wherein:
said operating function is an off-hook condition permitting said voice messaging system to go off-hook to record a voice message from said incoming call.

24. The method according to claim 23, wherein:
said memory further includes a plurality of indicators each being associated with respective call information of a caller permitted to record a voice message, such that when one of said plurality of indicators is identified, said off-hook condition is enabled.
